# EUROPÄISCHE PATENTANMELDUNG

(11) **EP 2 535 628 A2**
(43) Veröffentlichungstag der Anmeldung: **19.12.2012**
(21) Anmeldenummer: 12165090.7
(22) Anmeldetag: 23.04.2012
(51) Int. Cl.: F16L 11/115, F16L 11/118

(54) **Durchleitungselement für Fluide**

(30) Priorität: 14.06.2011 AT 3352011 U
(71) Anmelder: NeoTecha GmbH, 4600 Wels (AT)
(72) Erfinder: Gitterle, Andreas, 4609 Thalheim (AT)
(74) Vertreter: Staudt, Armin Walter

(57) **Zusammenfassung**

Die vorliegende Erfindung betrifft ein Durchleitungselement für Fluide, insbesondere für den Einsatz in der chemischen Prozesstechnik, welches hohe Flexibilität, gute Gleitfähigkeit, Chemikalienbeständigkeit, hohe Druck-, Zug- und Temperaturbeständigkeit aufweist und eine für Explosionszonen zugelassene leitfähige Oberfläche besitzt zum Einsatz in einer explosionsgefährdeten Umgebung. Es besteht aus einem chemikalienbeständigen Innenschlauch (1) und aus einer Ummantelung (2) aus weichen Kunststofffasern, wobei sich die Ummantelung (2) aus nicht leitfähigen Kunststofffäden (3) und aus leitfähigen Kunststofffäden (4) zusammensetzt, wobei die Kunststofffäden als Monofile, als Bänder oder als Stränge vorliegen und zur Bildung der Ummantelung (2) miteinander durch Flechten, Weben, Stricken oder in sonstiger bekannter Art zu einem Gewebe verbunden werden.

## Beschreibung

Die vorliegende Erfindung betrifft ein Durchleitungselement für Fluide zum Einsatz in einer explosionsgefährdeten Umgebung, insbesondere für den Einsatz in der chemischen Prozesstechnik, mit einer elektrisch leitfähigen Oberfläche.

### Stand der Technik

Ein Durchleitungselement für Fluide im Sinne der Erfindung ist in der Form eines ummantelten Schlauches ausgebildet und insbesondere für die Verwendung in der chemischen Industrie geeignet. Solche Durchleitungselemente werden unter anderem auch für die Handhabung von Fluiden für Hochtemperatur- und Hochdruckanwendungen mit hoher chemischer Resistenz in der chemischen Prozesstechnik eingesetzt, wobei das Durchleitungselement für das Fluid wenigstens ein temperatur- und druckbeständiges Stützelement umfasst, das einen ersten Innenraum umfasst, in welchem eine Leitung aus einem chemikalienbeständigen Kunststoffmaterial angeordnet ist.

Solche Durchleitungselemente sind für Anwendungen in der chemischen Prozesstechnik bekannt und werden beispielsweise zum Transport von unterschiedlichsten Fluiden, insbesondere von Flüssigkeiten, Gasen, Feststoffen und deren Gemischen zwischen Vorratsbehältern, Sammelgefäßen, Reaktoren usw. eingesetzt. Häufig sind in chemischen Prozessen aggressive Substanzen beteiligt, sodass die verwendeten Durchleitungselemente eine hohe Chemikalienbeständigkeit, insbesondere nach Norm TRBS 2153 aufweisen müssen. Ferner werden derartige chemische Prozesse häufig bei hohen Temperaturen, beispielsweise bis zu 260°C und/oder hohen Drücken durchgeführt. Bei vielen Anwendungen ist es zudem erforderlich, dass die Oberfläche des Durchleitungselements zusätzlich elektrisch leitfähig ist.

Es ist bekannt für den Einsatz in der chemischen Prozesstechnik Durchleitungselemente zu verwenden, die der deutschen technischen Richtlinie TRBS 2153 (GMBI. Nr. 15/16 vom 9. April 2009 S. 278) entspricht, bei denen der Innenschlauch aus einem fluorhältigen Polymerisat, beispielsweise aus PTFE besteht. Der Innenschlauch ist bevorzugt gerippt oder gewellt ausgebildet. Solche gerippten oder gewellten Schläuche sind besonders flexibel und erleichtern ihre Handhabung, insbesondere wenn das Durchleitungselement häufig gewechselt werden muss, beispielsweise wenn wechselnde Vorratsbehälter an den Reaktor angeschlossen werden. Die Flexibilität von gerippten oder gewellten Schläuchen hat jedoch den Nachteil, dass sie nicht besonders druckstabil sind. Wird der Innendruck des Fluids erhöht, so reagiert der gerippte oder gewellte Rohraufbau auf diese Druckerhöhung, indem sich der Schlauch ausweitet und dehnt. Dabei verringert sich seine Wandfestigkeit, was in weiterer Folge zur Leckage führt. Um die Schlauchwandstabilität zu erhöhen ist es bekannt, solche gerippten oder gewellten Schläuche mittels eines Gewebes oder Geflechtes zu ummanteln. Die Ummantelung wird an entgegengesetzten Enden des gerippten bzw. gewellten Schlauches mit üblichen Methoden befestigt. Der Mantel verstärkt den gerippten bzw. gewellten Schlauchaufbau, indem er der Ausdehnung der Schlauchwand entgegen wirkt, wenn der Innendruck erhöht wird.

Um den Aufbau von statischer Elektrizität auf dem Durchleitungselement zu vermeiden, ist es zudem üblich, das Mantelmaterial aus einem elektrisch leitenden Material, beispielsweise aus Edelstahl herzustellen. Dabei wird der PTFE-Schlauch zur Druckstabilisierung und zur Vermeidung des Aufbaus von statischer Elektrizität mit einem Geflecht aus Edelstahlfäden ummantelt.

Bei manchen chemischen Prozesstechniken ist es erforderlich die Durchleitungselemente häufig an Maschinenelemente anzuschließen und bei einem Wechsel, beispielsweise des Vorlagebehälters, wieder abzuhängen bzw. gegen ein anderes Durchleitungselement auszutauschen. Bei diesem Wechsel der Durchleitungselemente ist deren Mantelgeflecht einer besonders hohen mechanischen Beanspruchung ausgesetzt, da sie oftmals von ihrer Lagerstelle an ihre Montagestelle befördert werden, indem sie einfach über den Boden gezogen werden. Durch diese schleifende Beförderung und zusätzlich die Verbiegung während ihrer Handhabung können einzelne Drähte aus dem Mantelgeflecht brechen und stehen dann von der Manteloberfläche ab. Solche aus der Mantelfläche abstehenden Drahtenden führen dabei häufig zu Verletzungen.

Um dieses Verletzungsrisiko zu vermeiden, könnte zwar das Edelstahlgeflecht von einem weiteren Kunststoffmantel umhüllt werden, aber diese Maßnahme würde die Biegesteifigkeit erhöhen, wodurch die Handhabung erheblich erschwert würde und vor allem wäre dann die elektrische Leitfähigkeit der Oberfläche nicht mehr gegeben, darüber hinaus wären auch die Herstellungskosten höher. In der Praxis findet man daher hauptsächlich zweischichtige Durchleitungselemente aus einem chemikalienbeständigen Innenschlauch und einem Mantelgeflecht aus Edelstahl, wobei dann das Durchleitungselement bereits bei der geringsten Beschädigung gegen ein neues oder repariertes Durchleitungselement ausgetauscht werden muss. Leider wird man auf eine Beschädigung meist erst durch eine Verletzung aufmerksam.

Die WO 03/048622 und die EP 0882924 beschreiben ebenfalls Durchleitungselemente mit elektrisch leitfähigen Geflechten, hier dienen die elektrisch leitfähigen Geflechte aber zur Durchleitung von elektrischen Steuerungssignalen. Allerdings sind die dort offenbarten Durchleitungselemente nicht geeignet für die Durchleitung von aggressiven Fluiden mit Temperaturen bis zu 260°C in explosionsgefährdeten Zonen und sind für diesen Zweck auch nicht zugelassen.

Es ist auch bekannt, Fluidleitungen mit einem nichtmetallischen Gewebemantel zu versehen und um diesen Mantel herum oder innerhalb des Gewebes einen elektrischen Leiter anzuordnen. So beschreibt die DE 10 2004 001 887 eine Fluidleitung, bei der ein elektrischer Leiter in dem Gewebe oder Geflecht des Rohrmantels geradlinig oder gewunden, insbesondere wendelförmig angeordnet ist. Dabei kann das Innenrohr glatt oder gewellt sein. Solche Fluidleitungen werden üblicherweise dort verwendet, wo das Fluid während des Leitungsdurchtritts erwärmt wird, beispielsweise im Kraftfahrzeugbau bei Bremsleitungen oder Kraftstoffzuleitungen. Für Anwendungen in der chemischen Prozesstechnik sind solche Fluidleitungen jedoch nicht geeignet und auch nicht zugelassen.

### Technische Aufgabenstellung

Der Erfindung liegt die Aufgabe zugrunde ein Durchleitungselement für Fluide für den Einsatz in der chemischen Prozesstechnik zu schaffen, welches die genannten Nachteile des Standes der Technik zuverlässig vermeidet und bei dem insbesondere das Verletzungsrisiko durch abstehende Metallfasern beseitigt ist und zudem kostengünstig herzustellen ist. Das Durchleitungselement soll hohe Flexibilität aufweisen um eine gute Handhabung bei einem häufigen Wechsel dieser Durchleitungselemente zu gewährleisten, chemikalienbeständig sein und auch eine erhöhte Druck- und Temperaturbeständigkeit haben, sowie eine leitfähige Ummantelung besitzen. Weiters soll die Ummantelung eine relativ gute Gleitfähigkeit auch auf rauem Untergrund haben und bei Beschädigung der Mantelgewebefasern soll es zu keinem Verletzungsrisiko für das Bedienungspersonal kommen können.

### Allgemeine Beschreibung der Erfindung

Diese Aufgabe wird ausgehend von einem Durchleitungselement der eingangs genannten Gattung erfindungsgemäß dadurch gelöst, dass es einen chemikalienbeständigen Innenschlauch und eine Ummantelung aus Kunststofffasern umfasst, wobei die Ummantelung aus ersten, nicht leitfähigen Kunststofffäden und aus zweiten, leitfähigen Kunststofffäden gefertigt ist, wobei die ersten und die zweiten Kunststofffäden als Monofile, als Bänder oder als Stränge vorliegen und zur Bildung der Ummantelung miteinander durch Flechten, Weben, Stricken oder dergleichen zu einem textilen Gebilde verbunden sind.

Ein solches Durchleitungselement weist eine hohe Flexibiliät, gute Gleitfähigkeit, Chemikalienbeständigkeit, hohe Druck-, Zug- und Temperaturbeständigkeit auf.

Vorteilhafte Weiterentwicklungen sind Gegenstand der abhängigen Ansprüche.

Erfindungsgemäß wird das Durchleitungselement hergestellt aus einem gewellten oder gerippten Schlauch aus chemikalienbeständigem Material, wie beispielsweise aus PTFE der von einem Mantelgeflecht aus nichtmetallischem, aber dennoch leitfähigem Kunststoff aus relativ weichen Fasern umhüllt ist. Der Mantel besteht dabei aus zwei verschiedenen Kunststoffen, von denen einer elektrisch leitend ist.

Aus der DE 103 29 857 ist es bekannt für die Mantelhülle einer Kabelschutzvorrichtung Aramidfasern zu verwenden, da Aramidfasern eine hervorragende Zug- und ausreichende Scherfestigkeit haben. Allerdings wird hier erwähnt, dass sie nur bis etwa 180 °C hitzebeständig seien, weshalb die Kabelschutzvorrichtung einen radial dreischichtigen Aufbau hat, wobei die innere Schicht aus einer Mischung aus Glasseidenfäden und Aramidfäden ausgebaut ist, die mittlere Schicht aus einem Metallfasergestrick zur besseren Wärmeableitung und die äußere Schicht aus einem Metall-/Aramidgestrick gebildet ist, wobei der Aramid-Anteil jeweils zwischen 10% und 50% liegt.

Es hat sich nun überraschend gezeigt, dass die Herstellung der Schlauchumhüllung aus einem Kunststofffasergemisch mit mehr als 50% Anteil an Aramidfaser durchaus zu einem Durchleitungselement für die chemische Prozesstechnik führt, das auch bei Temperaturen von bis zu 260 °C noch zufriedenstellend eingesetzt werden kann. Dabei kann der Schlauchmantel gewirkt, gestrickt, gewebt oder geflochten werden. Der Schlauchmantel liegt dann rund und nahtlos vor. Geflochtene Schlauchummantelungen sind besonders kostengünstig herstellbar. Sie können entweder kreuzgeflochten oder spiralgeflochten oder in jeder anderen beliebigen Flechtungsart ausgeführt sein.

Prinzipiell ist es natürlich auch möglich, den Schlauch mantel aus einem ebenen Material mit einer Längsnaht zu fertigen. Wichtig ist nur eine homogene Verteilung der leitfähigen Kunststofffaser innerhalb der Schlauchummantelung. Hierbei muss auf den Einsatzzweck des Durchleitungselementes Bedacht genommen werden. Je nachdem, welche explosionsgefährdete Zone (= Ex-Zone) vorliegt, darf die zusammenhängende, nicht-leitfähige Fläche der Schlauchummantelung < 4cm², oder < 12 cm² oder größer sein. Daraus ergibt sich eine unterschiedliche prozentuale Zusammensetzung aus nicht-leitfähiger Aramidfaser und leitfähiger Kunststofffaser, wobei die Aramidfaser üblicherweise kostengünstiger ist.

Die Aramidfäden bestehen aus einer Vielzahl von Aramidfilamenten, welche zu einem Multifilament miteinander verzwirnt sind. Die nichtmetallische, hochfeste, chemisch beständige, leitfähige Faser besteht bevorzugt aus Streifen von expandierter PTFE-Folie mit eingelagertem Graphit, welche zu Flechtfäden verdreht ist.

Durch beispielsweise Kreuzflechtung werden die beiden Faserstränge miteinander eng anliegend um den Innenschlauch geflochten und bilden dadurch einen runden, nahtlosen, gleitfähigen Schlauchmantel, der sich durch hohe Zug- und Abriebfestigkeit, gute Gleitfähigkeit, hohe chemische Resistenz, hohe Temperatur- und Druckfestigkeit auszeichnet und zudem je nach Strick-oder Flechtmuster auch für Einsatzumgebungen geeignet ist, die nur einen geringen Anteil an zusammenhängender, nicht-leitfähiger Oberfläche zulassen.

Der besondere Vorteil ist aber in der hohen Arbeitssicherheit während der Handhabung dieser Durchleitungseinrichtungen zu sehen, da selbst bei gröberen Faserbrüchen durch Aufscheuern des Schlauchmantels keine verletzenden, steifen Faserstücke aus dem Schlauchmantel heraus ragen, an denen sich das Bedienungspersonal verletzen könnte.

Der Innenschlauch kann mit oder ohne Verstärkung ausgebildet sein. Die Verstärkung kann beispielsweise aus einer textilen Einlage oder einer Bewehrung bestehen, oder der Innenschlauch besitzt einen zwei- oder mehrschichtigen Aufbau. Auch die Abmessungen des Innenschlauchs sind in einem breiten Bereich frei wählbar und richten sich in erster Linie nach dem beabsichtigten Einsatzgebiet. Die Wandstärke des PTFE-Schlauchs kann beispielsweise 0,2 bis 3,5 mm betragen, der freie Schlauchinnendurchmesser kann 5 bis 150 mm oder noch mehr betragen.

Der Schlauchmantel besteht mindestens aus zwei Gewebebestandteilen, die als Fäden, Monofile, Bänder oder Stränge vorliegen und zur Bildung des Schlauchmantels miteinander durch Flechten, Weben oder in sonstiger bekannter Art zu einem Gewebe verbunden werden. Die beiden Gewebebestandteile können jede übliche Gestalt und Querschnittsform aufweisen, die für eine solche Verarbeitung geeignet ist. Sie können auch gleiche oder ähnliche Querschnitte aufweisen. Es ist auch möglich, den ersten Gewebebestandteil aus mehr als einer Kunststoffkomponente zusammen zu setzen. Hier ist eine Vielzahl von Variationen möglich, die aus Gründen der Effizienz hier aber nicht alle genannt sind. Stellvertretend für alle in Frage kommenden Kunststofffasern und deren Gemengen wird hier Aramidfaser benannt.

Die für die beiden Gewebebestandteile eingesetzten Kunststoffe können gleich oder verschieden sein. Es kann sich auch um Mischungen von Kunststoffen handeln. Stellvertretend für alle in Frage kommenden Kunststofffasern werden hier bevorzugt Aramidfaser und mit Graphit versetzte PTFE-Faser behandelt.

Beide Fasern sind im Handel erhältlich. Zur Herstellung des Schlauchgewebes kann der Anteil der beiden Gewebebestandteile in einem breiten Bereich variieren und hängt in erster Linie davon ab, ob es sich um eine explosionsgefährdete Umgebung und wenn ja, um welche Ex-Zone davon es sich handelt.

Die Umflechtung oder Umwebung des Innenschlauchs kann auf alle bekannten Arten erfolgen, vorzugsweise wird der Innenschlauch so dicht ummantelt, dass die gewünschte Zug- und Druckfestigkeit erzielt wird. Beim Flechten lässt sich anhand des Flechtwinkels und der Anzahl der geflochtenen Fäden die erforderliche Druckfestigkeit optimieren.

An Stelle von Aramidfasern können auch LCP-Fasern, Polyethylenfasern oder Polyamidfasern eingesetzt werden.

### Ausführungsbeispiel

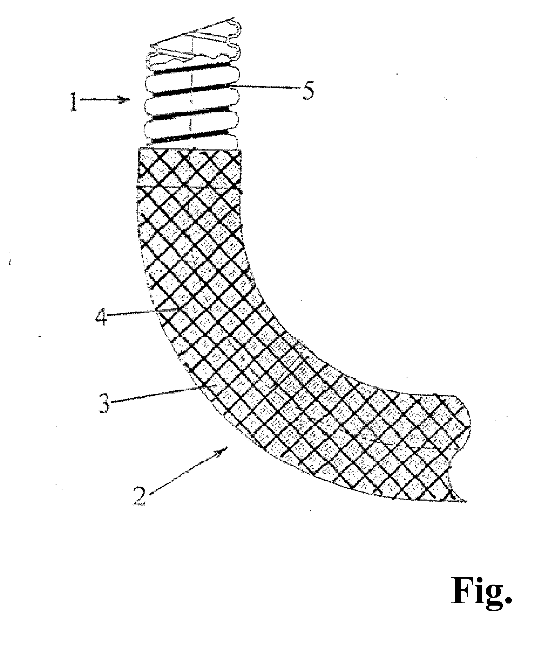

Nachfolgend wird das erfindungsgemäße Durchleitungselement anhand der einzigen Figur nochmals erläutert, wobei hier exemplarisch eine der möglichen Ausführungsformen dargestellt ist, um das Prinzip der Erfindung zu verdeutlichen.

Das Durchleitungselement besteht, neben den hier nicht dargestellten Anschlüssen, welche zum Stand der Technik gehören, aus einem chemikalienbeständigen Innenschlauch 1 aus elektrisch leitfähigem PTFE und aus einer Ummantelung 2 aus Kunststofffasern, wobei sich die Ummantelung 2 aus ersten, nicht leitfähigen Kunststofffäden 3 und aus zweiten, leitfähigen Kunststofffäden 4 zusammensetzt. Die Kunststofffäden 3 und 4 liegen als Monofile, als Bänder oder als Stränge vor und werden miteinander zur Bildung der Ummantelung 2 durch Flechten, Weben, Stricken oder in sonstiger bekannter Art zu einem Gewebe verbunden, welches eng um den Innenschlauch herum anliegt. Bei dieser Ausführungsform ist hier der gerippte Innenschlauch 1 noch zusätzlich mit einer Spirale 5 aus Edelstahl als zusätzliche Bewehrung ausgestattet. Bei einem Biegen des Durchleitungselementes wird auch die Ummantelung 2 entsprechend mitgebogen, sodass die Festigkeit der Gesamtvorrichtung in jedem Fall erhalten bleibt. Wird die Ummantelung bei hoher mechanischer Beanspruchung oberflächlich geringfügig beschädigt indem einzelne Fasern reißen, so stehen von der Ummantelung 2 weiche, biegsame Einzelfasern ab, die kein Verletzungsrisiko für das Bedienungspersonal darstellen, aber optisch genauso gut erfasst werden können. Aufgrund der im Vergleich zu mit Edelstahlgeflecht ummantelten Durchleitungselementen besseren Gleitfähigkeit des erfindungsgemäßen Durchleitungselementes auch auf rauem Untergrund ist darüber hinaus auch eine längere Haltbarkeit gegeben.

## Patentansprüche

1. Explosionsgeschütztes Durchleitungselement für Fluide, insbesondere für den Einsatz in der chemischen Prozesstechnik, mit einer elektrisch leitfähigen Oberfläche , **dadurch gekennzeichnet, dass** es einen chemikalienbeständigen Innenschlauch (1) und eine Ummantelung (2) aus Kunststofffasern umfasst, wobei die Ummantelung (2) aus ersten, nicht leitfähigen Kunststofffäden (3) und aus zweiten, leitfähigen Kunststofffäden (4) gefertigt ist, wobei die ersten und die zweiten Kunststofffäden (3, 4) als Monofile, als Bänder oder als Stränge vorliegen und zur Bildung der Ummantelung (2) miteinander durch Flechten, Weben, Stricken oder dergleichen zu einem textilen Gebilde verbunden sind.

2. Durchleitungselement nach Anspruch 1, **dadurch gekennzeichnet, dass** der Innenschlauch (1) gewellt oder gerippt ist und vorzugsweise aus PTFE-Kunststoff besteht.

3. Durchleitungselement nach Anspruch 1 oder 2, **dadurch gekennzeichnet, dass** die Ummantelung (2) durch Rundweben, Rundflechten, Rundstricken oder Rundwirken der leitfähigen Kunststofffäden (4) mit den nichtleitfähigen Kunststofffäden (3) hergestellt ist.

4. Durchleitungselement nach einem der vorhergehenden Ansprüche, **dadurch gekennzeichnet, dass** das Anteilsverhältnis der leitfähigen Kunststofffäden (4) zu den nicht leitfähigen Kunststofffäden (3) und der Abstand zwischen zwei Fäden der leitfähigen Kunststofffäden (4) variiert, abhängig von der Art der explosionsgefährdeten Zone des Einsatzortes des Durchleitungselements, entsprechend der deutschen technischen Richtlinie TRBS 2153.

5. Durchleitungselement nach Anspruch 1 oder 2, **dadurch gekennzeichnet, dass** die Ummantelung (2) zuerst als flächiges Gebilde hergestellt und anschließend eng anliegend um den Innenschlauch (1) mittels einer Längsnaht befestigt wird.

6. Durchleitungselement nach Anspruch 5 **dadurch gekennzeichnet, dass** das Anteilsverhältnis der leitfähigen Kunststofffäden (4) zu den nicht leitfähigen Kunststofffäden (3) und der Abstand zwischen zwei Fäden der leitfähigen Kunststofffäden (4) variiert, abhängig von der Art der explosionsgefährdeten Zone des Einsatzortes der Durchleitungseinrichtung, entsprechend der deutschen technischen Richtlinie TRBS 2153.

7. Durchleitungselement nach einem der Ansprüche 1 bis 6, **dadurch gekennzeichnet, dass** die Ummantelung (2) kreuzgeflochten oder spiralgeflochten oder in einer anderen bekannten Flechtart ausgeführt ist.

8. Durchleitungselement nach einem der Ansprüche 1 bis 7, **dadurch gekennzeichnet, dass** die leitfähigen Kunststofffäden (4) gleichmäßig verteilt und zusammenhängend zwischen den nicht leitfähigen Kunststofffäden (3) angeordnet sind, wobei die zusammenhängende Fläche der nicht leitfähigen Kunststofffäden (3), die durch die leitfähigen Kunststofffäden (4) begrenzt wird, abhängig vom Einsatzort größer oder kleiner als 12 cm² oder kleiner als 4 cm² ist.

9. Durchleitungselement nach einem der Ansprüche 1 bis 8, **dadurch gekennzeichnet, dass** der nichtleitfähige Kunststofffaden (3) ein Faden aus Aramidfaser und der leitfähige Kunststofffaden (4) ein Faden aus einem verdrehten, expandierten PTFE-Folienstreifen mit eingelagertem Graphit ist.

10. Durchleitungselement nach einem der Ansprüche 1 bis 9, **dadurch gekennzeichnet, dass** der Innenschlauch (1) mit einer Verstärkung in der Form einer textilen Einlage oder einer Bewehrung (5) ausgebildet ist.

11. Durchleitungselement nach einem der Ansprüche 1 bis 10, **dadurch gekennzeichnet, dass** der Innenschlauch (1) ein-, zwei- oder mehrschichtig aufgebaut ist.

12. Durchleitungselement nach einem der Ansprüche 1 bis 11, **dadurch gekennzeichnet, dass** der nicht leitfähige Kunststofffaden (3) und der leitfähige Kunststofffaden (4) der Ummantelung (2) gleiche oder ähnliche Querschnitte aufweisen.

13. Durchleitungselement nach einem der Ansprüche 1 bis 12, **dadurch gekennzeichnet, dass** sich der nicht leitfähige Kunststofffaden (3) aus mehr als einer Kunststoffkomponente zusammensetzt.

14. Durchleitungselement nach einem der Ansprüche 1 bis 13, **dadurch gekennzeichnet, dass** die nicht leitfähigen Kunststofffäden (3) und die leitfähigen Kunststofffäden (4), aus denen die Ummantelung (2) gefertigt ist, weicher sind als ein Edelstahlgeflecht.
